# EUROPÄISCHE PATENTSCHRIFT

(11) **EP 0 666 412 B1**
(45) Veröffentlichungstag und Bekanntmachung des Hinweises auf die Patenterteilung: **06.05.1998**
(21) Anmeldenummer: 94810706.5
(22) Anmeldetag: 07.12.1994
(51) Int. Cl.: F02C 7/18, F01D 25/30, F01K 23/10

(54) **Verfahren zur Kühlung von Kühlluft für eine Gasturbine**
Method for cooling the cooling air for a gasturbine
Méthode pour refroidir l'air de refroidissement pour une turbine à gaz

(30) Priorität: 29.12.1993 DE 4344857
(43) Veröffentlichungstag der Anmeldung: 09.08.1995
(73) Patentinhaber: ASEA BROWN BOVERI AG, 5400 Baden (CH)
(72) Erfinder: Nielsen, Henrik, CH-5430 Wettingen (CH)

(56) Entgegenhaltungen:
- CH-A- 679 236
- DE-A- 2 926 365
- DE-A- 2 926 366
- DE-C- 897 634
- GB-A- 1 244 340
- GB-A- 2 034 822
- US-A- 2 519 531

## Beschreibung

### Technisches Gebiet

Die Erfindung betrifft ein Verfahren und eine Vorrichtung zum Betreiben einer Gasturbine in einem einfachen und in einem mit einer Dampfturbine kombinierten Zyklus.

### Stand der Technik

In letzter Zeit werden verstärkt Gasturbinen mit Dampfturbinen zu kombinierten Gas-/Dampfturbinen-Kraftwerken, sogenannten Kombikraftwerken verbunden. Bei diesen Kraftwerken liefern die Abgase des Gasturbinenkreislaufs die Energie für den nachgeschalteten Dampfturbinenkreislauf.

Dazu sind im Abhitzekessel der Gasturbine Wärmetauscher angeordnet, die den Abgasen der Gasturbine, bevor diese durch einen Kamin in die Atmosphäre abgegeben werden, den grössten Teil der in ihnen vorhandenen Wärme entziehen. Mit Hilfe dieser Wärme wird zugeführtes Wasser in einem mehrstufigen Wasser-/Dampfkreislauf verdampft und Frischdampf gewonnen. Dieser wird der Dampfturbine zugeführt und beaufschlagt deren Schaufelreihen, so dass die thermische in mechanische Energie umgewandelt wird. Die Dampfturbine ist mit einem Generator gekoppelt, welcher elektrische Energie produziert.

Auf diese Weise ist eine relativ hohe Ausnutzung des Brennstoffs möglich und es können relativ hohe Wirkungsgrade erreicht werden.

Aber auch in solchen Kombikraftwerken wird ein Teil der anfallenden Wärmeenergie nicht genutzt und als Abwärme an die Umgebungsluft abgegeben. Derartige Energieverluste müssen jedoch minimiert werden, wenn der Wirkungsgrad des Kraftwerks gesteigert werden soll.

Entsprechend der EP 05 19 304 A1 ist ein Kombikraftwerk bekannt, bei dem die Energie der im Verdichter aufgeheizten und für die Gasturbine vorgesehenen Kühlluft nicht als Abwärme an die Aussenluft abgegeben wird, sondern dazu dient, ein flüssiges Zusatzmedium in Dampf umzuwandeln. Dazu ist ein separates, mit integrierten Wärmetauschern versehenes, zweites Kühlsystem ausgebildet. Es führt zunächst Kühlwasser, welches beim Durchströmen der Wärmetauscher in Dampf umgewandelt und dieser schliesslich in die Brennkammer der Gasturbine eingeleitet wird. Das separate Kühlsystem kann den Dampf auch in den Wasser-/Dampfkreislauf des Abhitzekessels einspeisen, wozu beide miteinander verbunden werden.

Problematisch erweist sich ein solches separates Kühlsystem, wenn die Anlage vom Kombizyklus, d.h. dem gemeinsamen Betrieb von Gas- und Dampfturbine, auf den einfachen Zyklus, d.h. den alleinigen Betrieb der Gasturbine umgestellt werden soll. In diesem Fall werden die Abgase der Gasturbine nicht mehr in die Wärmetauscher des Abhitzekessels, sondern direkt in den Kamin geleitet. Der im Abhitzekessel ablaufende Wasser/Dampfkreislauf wird somit inaktiviert und die Zufuhr von Kühlwasser eingestellt. Damit dann auch das flüssige Zusatzmedium bzw. der Dampf des zweiten Kühlsystems nicht mehr in die Wärmetauscher eindringen kann, muss deren Verbindung unterbrochen und die Verbindung zur Brennkammer oder einem anderen Abnehmer geöffnet werden.

Das erfordert komplizierte, aufeinander abgestimmte Schaltvorgänge und verringert die Systemzuverlässigkeit.

Zur Anordnung eines solchen separaten Kühlsystems wird eine Reihe von zusätzlichen Bauteilen, wie Pumpen, Rohrleitungen und Wärmetauscher benötigt, welche die Anlage nicht nur komplizierter werden lassen, sondern auch verteuern.

Ausserdem besteht bei einer Leckage in dem kombinierten Luft-Wasser-Kühlsystem die Gefahr, dass Kühlwasser in die Gasturbine eindringt und dort zu einer Havarie führt. Zumindestens kann jedoch die Wirkung zum Zweck der Luftkühlung angeordneter Öffnungen der Rotorschaufeln durch die im Kühlwasser enthaltenen Verunreinigungen und Mineralien beeinträchtigt werden, was die Funktionsfähigkeit der Gasturbine stark gefährdet.

### Darstellung der Erfindung

Die Erfindung versucht, all diese Nachteile zu vermeiden. Ihr liegt die Aufgabe zugrunde, ein einfaches, funktionssicheres und kostengünstiges Verfahren zum Betreiben einer Gasturbine in einem einfachen und in einem mit einer Dampfturbine kombinierten Zyklus unter Steigerung des Wirkungsgrades und bei unproblematischer Umschaltung vom Einzel- auf den Kombizyklus sowie umgekehrt und eine Vorrichtung zur Durchführung des Verfahrens zu schaffen.

Erfindungsgemäss wird dies dadurch erreicht, dass bei einem Verfahren entsprechend dem Oberbegriff des Anspruchs 1, zur Abkühlung der Kühlluft ein gasförmiges Medium über einen Kühler in den Abhitzekessel geführt wird. Dabei wird das gasförmige Medium im Kühler durch Wärmetausch mit der Kühlluft der Gasturbine bis nahe an deren Temperatur aufgeheizt und anschliessend in das Abgas der Gasturbine eingemischt. Das dabei entstandene Abgas-Heissgas-Gemisch wird im Kombi zyklus dem Wasser-/Dampfkreislauf zugeführt und im einfachen Zyklus über einen Bypasskamin an die Umgebung abgeführt.

Dazu ist die Gasturbine abgasseitig durch ein Übergangsstück mit dem Abhitzekessel verbunden. Im Bereich des Übergangsstückes ist am Abhitzekessel ein mit einer Verschlussklappe versehener Bypasskamin und in Strömungsrichtung davor ein Kühler mit einem integrierten Wärmetauscher angeordnet. Sowohl die Gasturbine als auch der Kühler münden in eine gemeinsame Mischzone im Bereich des Übergangsstückes. Am Wärmetauscher greift eine Zu- bzw. Ableitung für die Kühlluft der Gasturbine an.

Die Vorteile der Erfindung liegen unter anderem darin, dass das zweite Kühlsystem nicht separat angeordnet und geschaltet werden muss, sondern direkt in den Abhitzekessel integriert ist. Damit entfallen die mit dem bisher erforderlichen separaten Kühlsystem verbundenen Probleme beim Umschalten des Kombibetriebes von Gas- und Dampfturbine auf den einfachen Betrieb der Gasturbine und umgekehrt.

Wird also beim Umschalten der Anlage die Verschlussklappe des Bypasskamins geöffnet oder geschlossen, so wird das Abgas-Heissgas-Gemisch dementsprechend entweder über den Bypasskamin an die Umgebung oder an den Abhitzekessel, d.h. den Wasser-/Dampfkreislauf abgegeben. Auf diese Weise erfolgt ein automatischer Wechsel der Anlage entsprechend der jeweiligen Betriebsart, d.h. ohne zusätzliche und aufeinander abzustimmende Schaltvorgänge der Kühlsysteme. Infolge der direkten und zusätzlichen Einspeisung der Abwärme der Kühlluft in den Abhitzekessel wird die Leistung der Dampfturbine erhöht.

Beeinträchtigungen der Funktionsfähigkeit der Gasturbine aufgrund eindringenden Kühlwassers sind von vornherein ausgeschlossen, weil nicht Wasser, sondern ein gasförmiges Medium, d.h. ein Medium mit geringerem Druck als Wärmetauschmittel für die Kühlluft eingesetzt wird.

Als gasförmige Medien werden mit Vorteil Umgebungsluft oder Rauchgas verwendet, da beide Stoffgemische relativ leicht verfügbar sind.

Es ist besonders zweckmässig, wenn die zur Abkühlung der Kühlluft der Gasturbine eingesetzte Umgebungsluft im Kühler zunächst auf ein weiteres Abwärme-Medium des Kombikraftwerkes trifft, welches ein niedrigeres Temperaturniveau als die Kühlluft aufweist. Die Umgebungsluft wird dabei vorgeheizt und erst anschliessend durch Wärmetausch mit der Kühlluft der Gasturbine bis nahe an deren Temperatur aufgeheizt. Als weiteres Abwärme-Medium wird vorzugsweise die Energie des Rauchgases aus einer entsprechenden Stelle des Abhitzekessels verwendet.
Dazu verläuft im Kühler, in Strömungsrichtung des gasförmigen Mediums vor der Zu- bzw. Ableitung für die Kühlluft der Gasturbine eine zweite Zu- bzw. Ableitung für das Abwärme-Medium.

Durch das Vorheizen der Umgebungsluft mittels eines weiteren Abwärme-Mediums von geringerem Temperaturniveau als das der Kühlluft wird zum einen, infolge der Nutzung einer bisherigen Abwärmeenergie, ein besserer Wirkungsgrad erreicht und zum anderen ein gleichmässiger Temperaturanstieg im Kühler erzielt, was dessen Standzeit erhöht.

Neben dieser ergeben sich weitere Möglichkeiten zur Abkühlung der Gasturbinen-Kühlluft, und zwar mittels der vorhandenen, jedoch nicht vorgewärmten Umgebungsluft oder mittels des Rauchgases aus dem Abhitzekessel.

Bei einem ausschliesslich im Kombibetrieb genutzten Kraftwerk sind die einzelnen Bauteile analog angeordnet, es ist jedoch kein Bypasskamin erforderlich.

### Kurze Beschreibung der Zeichnung

In der Zeichnung ist ein Ausführungsbeispiel der Erfindung anhand eines mit der Gasturbine verbundenen Abhitzekessels dargestellt.

Es zeigen:
- Fig. 1: einen Teillängsschnitt der im einfachen Zyklus betriebenen Anlage;
- Fig. 2: einen Teillängsschnitt der im Kombizyklus betriebenen Anlage, mit Vorwärmung der Kühlluft;
- Fig. 3: einen Teillängsschnitt entsprechend Fig. 1, ohne Bypasskamin.

Es sind nur die für das Verständnis der Erfindung wesentlichen Elemente gezeigt. Nicht dargestellt sind von der Anlage beispielsweise der Verdichter der Gasturbine und die Dampfturbine. Die Strömungsrichtung der Arbeitsmittel ist mit Pfeilen bezeichnet.

### Weg zur Ausführung der Erfindung

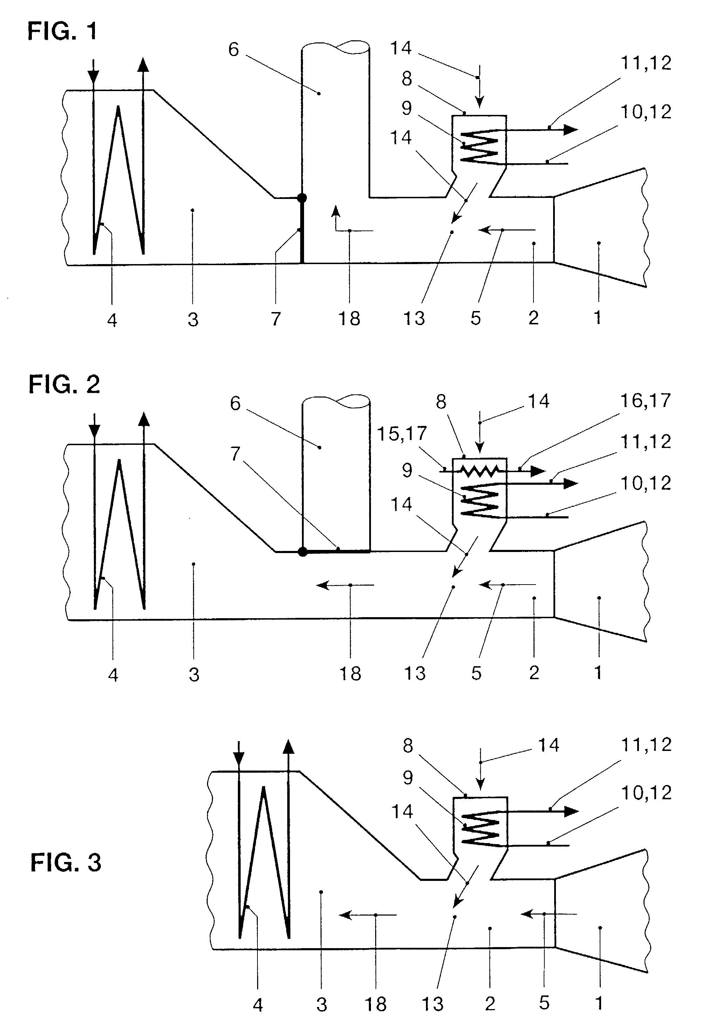

Die Gasturbine 1 ist mittels eines Übergangsstückes 2 mit dem Abhitzekessel 3 verbunden. Im Abhitzekessel 3 ist ein Wasser-/Dampfkreislauf 4 angeordnet, der den Abgasen 5 der Gasturbine 1 den grössten Teil der noch vorhandenen Wärme entzieht, damit Frischdampf erzeugt und mit diesem die Dampfturbine speist. Im Bereich des Übergangsstückes 2 ist am Abhitzekessel 3 ein Bypasskamin 6 angeordnet. Dieser ist mit einer Verschlussklappe 7 versehen, welche im geöffneten Zustand das Übergangsstück 2 gegenüber dem Abhitzekessel 3 verschliesst, im Kombizyklus jedoch selbst geschlossen ist. In Strömungsrichtung vor dem Bypasskamin 6 ist, ebenfalls am Abhitzekessel 3, ein Kühler 8 mit einem integrierten Wärmetauscher 9 angeordnet. Am Wärmetauscher 9 greift eine Zu- bzw. Ableitung 10,11 für die Kühlluft 12 der Gasturbine 1 an. Der Kühler 8 und die Gasturbine 1 münden in den gleichen Bereich des Übergangsstückes 2, so dass dort eine Mischzone 13 ausgebildet ist (Fig. 1).

Zur Abkühlung der Kühlluft 12 wird als gasförmiges Medium 14 Umgebungsluft über den Kühler 8 in den Abhitzekessel 3 geführt. Die Umgebungsluft 14 wird durch Wärmetausch mit der Kühlluft 12 der Gasturbine 1 bis nahe an deren Temperatur aufgeheizt. Im Kühler 8 verläuft, in Strömungsrichtung der Umgebungsluft 14 vor der Zu- bzw. Ableitung 10,11 für die Kühlluft 12 der Gasturbine 1, eine zweite Zu- bzw. Ableitung 15,16 für das als ein weiteres Abwärme-Medium 17 des Kombikraftwerkes eingesetzte Rauchgas des Abhitzekessels 3 (Fig. 2).
Da das Temperaturniveau des Rauchgases 17 niedriger als das der Kühlluft 12 der Gasturbine 1, aber höher als das der Umgebungsluft 14 ist, erfolgt zunächst eine Vorwärmung und damit eine gleichmässige Erwärmung dieser Umgebungsluft 14 und demzufolge auch des Kühlers 8.

Weitere Möglichkeiten zur Temperatursenkung der Kühlluft 12 ergeben sich durch die Verwendung von nicht vorgewärmter Umgebungsluft oder auch von Rauchgas aus dem Abhitzekessel als gasförmiges Medium 14.

Anschliessend wird die aufgeheizte Umgebungsluft 14 in das Abgas 5 der Gasturbine 1 eingeführt und in der Mischzone 13 mit diesem vermischt. Das entstandene Abgas-Heissgas-Gemisch 18 wird in den Wasser-/Dampfkreislauf 4 eingeleitet und bewirkt dort eine vergrösserte Dampferzeugung für die Dampfturbine.

Soll die Gasturbine 1 allein, d.h. ohne die Dampfturbine betrieben werden, wird die Verschlussklappe 7 geöffnet und damit das Übergangsstück 2 gegenüber dem Abhitzekessel 3 verschlossen, so dass das Abgas-Heissgas-Gemisch 17 über den Bypasskamin 6 an die Umgebung abgegeben wird.
Auf diese Weise erfolgt der Wechsel der Anlage vom Kombizyklus zum einfachen Zyklus und durch erneutes Schliessen der Verschlussklappe 7 auch umgekehrt, ohne zusätzliche und aufeinander abzustimmende Schaltvorgänge der Kühlsysteme.

Soll die Anlage ausschliesslich im Kombizyklus betrieben werden, ist kein Bypasskamin 6 angeordnet. Der Kühler kann dann entweder vor dem oder, aus thermodynamischen Gründen, auch am Abhitzekessel 3 angeordnet werden. Ist letzteres der Fall, erfolgt die Einmischung der aufgeheizten Umgebungsluft 14 zwischen den einzelnen, nicht dargestellten Rohrbündeln des Abhitzekessels 3. Alle anderen Bauteile sind analog der bereits beschriebenen, wahlweise im einfachen oder kombinierten Zyklus betriebenen Anlage angeordnet und funktionieren entsprechend (Fig.3).

### Bezugszeichenliste

- 1: Gasturbine
- 2: Übergangs stück
- 3: Abhitzekessel
- 4: Wasser-/Dampfkreislauf
- 5: Abgas
- 6: Bypasskamin
- 7: Verschlussklappe
- 8: Kühler
- 9: Wärmetauscher
- 10: Zuleitung
- 11: Ableitung
- 12: Kühlluft
- 13: Mischzone
- 14: gasförmiges Medium, Umgebungsluft, Rauchgas
- 15: Zuleitung
- 16: Ableitung
- 17: Abwärme-Medium, Rauchgas, Rauchgasenergie
- 18: Abgas-Heissgas-Gemisch

## Patentansprüche

1. Verfahren zum Betreiben einer Gasturbine in einem einfachen und in einem mit einer Dampfturbine kombinierten Zyklus, bei dem
a) die Abgase der Gasturbine in einen Abhitzekessel eingeleitet werden,
b) dort den grössten Teil ihrer Wärmeenergie auf einen Wasser-/Dampfkreislauf übertragen,
c) im Wasser-/Dampfkreislauf der die Dampfturbine beaufschlagende Frischdampf erzeugt wird,
d) die Abgase des Abhitzekessels durch einen Kamin in die Atmosphäre abgegeben werden, und
e) ein Teil der vom Verdichter komprimierten Luft als Kühlluft für die Gasturbine verwendet und vor Eintritt in die Gasturbine abgekühlt wird,
dadurch gekennzeichnet, dass
f) zur Abkühlung der Kühlluft (12) ein gasförmiges Medium (14) über einen Kühler (8) in den Abhitzekessel (3) geführt wird,
g) das gasförmige Medium (14) im Kühler (8) durch Wärmetausch mit der Kühlluft (12) der Gasturbine (1) bis nahe an deren Temperatur aufgeheizt wird,
h) das aufgeheizte gasförmige Medium (14) anschliessend in das Abgas (5) der Gasturbine (2) eingemischt, und
i) das entstandene Abgas-Heissgas-Gemisch (18) im Kombizyklus dem Wasser-/Dampfkreislauf (4) zugeführt und im einfachen Zyklus an die Umgebung abgeführt wird.

2. Verfahren nach Anspruch 1, dadurch gekennzeichnet, dass als gasförmiges Medium (14) Umgebungsluft verwendet wird.

3. Verfahren nach Anspruch 1, dadurch gekennzeichnet, dass als gasförmiges Medium (14) Rauchgas verwendet wird.

4. Verfahren nach Anspruch 1 und 2, dadurch gekennzeichnet, dass das gasförmige Medium (14) im Kühler (8) zunächst auf ein, ein niedrigeres Temperaturniveau als das der Kühlluft (12) aufweisendes, weiteres Abwärme-Medium (17) des Verfahrens, vorzugsweise Rauchgasenergie des Abhitzekessels (3) trifft, dabei vorgeheizt und erst anschliessend durch Wärmetausch mit der Kühlluft (12) der Gasturbine (1) bis nahe an deren Temperatur aufgeheizt wird.

5. Vorrichtung zur Durchführung des Verfahrens nach Anspruch 1, dadurch gekennzeichnet, dass die Gasturbine (1) mittels eines an sich bekannten Übergangsstückes (2) am Abhitzekessel (3) angeschlossen ist, im Bereich des Übergangsstückes (2) am Abhitzekessel (3) ein, mit einer Verschlussklappe (7) versehener, an sich bekannter Bypasskamin (6) und in Strömungsrichtung davor ein Kühler (8) mit einem integrierten Wärmetauscher (9) angeordnet ist, dass sowohl die Gasturbine (1) als auch der Kühler (8) in eine gemeinsame Mischzone (13) im Bereich des Übergangsstückes (2) münden und am Wärmetauscher (9) eine Zu- bzw. Ableitung (10,11) für die Kühlluft (12) der Gasturbine (1) angreift.

6. Vorrichtung zur Durchführung des Verfahrens nach Anspruch 1, dadurch gekennzeichnet, dass die Gasturbine (1) mittels eines an sich bekannten Übergangsstückes (2) am Abhitzekessel (3) angeschlossen ist, vor dem bzw. am Abhitzekessel (3) ein Kühler (8) mit einem integrierten Wärmetauscher (9) angeordnet ist, dass sowohl die Gasturbine (1) als auch der Kühler (8) in eine gemeinsame Mischzone (13) münden und am Wärmetauscher (9) eine Zu- bzw. Ableitung (10,11) für die Kühlluft (12) der Gasturbine (1) angreift.

7. Vorrichtung nach Anspruch 5 und 6, dadurch gekennzeichnet, dass im Kühler (8), in Strömungsrichtung des gasförmigen Mediums (14) vor der Zu- bzw. Ableitung (10,11) für die Kühlluft (12) der Gasturbine (1) eine zweite Zu- bzw. Ableitung (15,16) für eine Abwärme-Medium (17) mit niedrigerem Temperaturniveau als das der Kühlluft (12) verläuft.

## Claims

1. Method for operating a gas turbine in a simple cycle and in a cycle combined with a steam turbine, in which
a) the exhaust gases from the gas turbine are introduced into a waste-heat boiler,
b) the major proportion of their thermal energy is there transferred to a water/steam circuit,
c) the live steam admitted to the steam turbine is generated in the water/steam circuit,
d) the exhaust gases from the waste-heat boiler are released to the atmosphere through a chimney, and
e) a part of the air compressed by the compressor is used as cooling air for the gas turbine and is cooled before entry into the gas turbine,
characterized in that
f) in order to cool the cooling air (12), a gaseous medium (14) is fed via a cooler (8) into the waste-heat boiler (3),
g) the gaseous medium (14) is heated in the cooler (8) by heat exchange with the cooling air (12) of the gas turbine (1) to a temperature near to that of the cooling air,
h) the heated gaseous medium (14) is subsequently mixed into the exhaust gas (5) from the gas turbine (2), and
i) the resulting mixture (18) of exhaust gas and hot gas is supplied to the water/steam circuit (4) in the combined cycle and is released to the environment in the simple cycle.

2. Method according to Claim 1, characterized in that ambient air is used as the gaseous medium (14).

3. Method according to Claim 1, characterized in that combustion gas is used as the gaseous medium (14).

4. Method according to Claim 1 and 2, characterized in that in the cooler (8) the gaseous medium (14) first of all meets a further waste-heat medium (17) of the method with a lower temperature level than the cooling air (12), preferably combustion gas energy from the waste-heat boiler (3), is preheated by this means and only then is heated by heat exchange with the cooling air (12) of the gas turbine (1) to a temperature near that of the cooling air.

5. Appliance for carrying out the method of Claim 1, characterized in that the gas turbine (1) is connected to the waste-heat boiler (3) by means of a transition piece (2) known per se, a by-pass chimney (6), known per se and provided with a closing flap (7), is arranged on the waste-heat boiler (3) in the region of the transition piece (2) and a cooler (8) with an integrated heat exchanger (9) is arranged upstream of the by-pass chimney, in that both the gas turbine (1) and the cooler (8) open into a common mixing zone (13) in the region of the transition piece (2) and a supply conduit and an extraction conduit (10, 11) for the cooling air (12) of the gas turbine (1) act on the heat exchanger (9).

6. Appliance for carrying out the method of Claim 1, characterized in that the gas turbine (1) is connected to the waste-heat boiler (3) by means of a transition piece (2) known per se, and a cooler (8) with an integrated heat exchanger (9) is arranged before or on the waste-heat boiler (3), in that both the gas turbine (1) and the cooler (8) open into a common mixing zone (13) and a supply conduit and an extraction conduit (10, 11) for the cooling air (12) of the gas turbine (1) act on the heat exchanger (9).

7. Appliance according to Claim 5 and 6, characterized in that a second supply conduit and extraction conduit (15, 16) for a waste-heat medium (17) with a lower temperature level than the cooling air (12) extends in the cooler (8) before the supply conduit and the extraction conduit (10, 11) for the cooling air (12) of the gas turbine (1), viewed in the flow direction of the gaseous medium (14).

## Revendications

1. Procédé pour la conduite d'une turbine à gaz dans un cycle simple et dans un cycle combiné avec une turbine à vapeur, dans lequel
a) les gaz d'échappement de la turbine à gaz sont introduits dans une chaudière de récupération,
b) ils y cèdent la plus grande partie de leur énergie thermique à un circuit eau/vapeur,
c) dans le circuit eau/vapeur est produite la vapeur vive alimentant la turbine à vapeur,
d) les gaz d'échappement de la chaudière de récupération sont rejetés à l'atmosphère par une cheminée, et
e) une partie de l'air comprimé par le compresseur est utilisée comme air de refroidissement pour la turbine à gaz et est refroidie avant d'entrer dans la turbine à gaz,
caractérisé en ce que
f) pour le refroidissement de l'air de refroidissement (12), un fluide gazeux (14) est introduit dans la chaudière de récupération (3) par un refroidisseur (8),
g) le fluide gazeux (14) est réchauffé dans le refroidisseur (8), par échange de chaleur avec l'air de refroidissement (12) de la turbine à gaz (1), jusqu'à une température proche de la température de celle-ci,
h) le fluide gazeux (14) réchauffé est ensuite mélangé aux gaz d'échappement (5) de la turbine à gaz (2), et
i) le mélange de gaz d'échappement-gaz chaud formé (18) est envoyé au circuit eau/vapeur (4) dans le cycle combiné et rejeté à l'ambiance dans le cycle simple.

2. Procédé suivant la revendication 1, caractérisé en ce que l'on utilise l'air ambiant comme fluide gazeux (14).

3. Procédé suivant la revendication 1, caractérisé en ce que l'on utilise des gaz de fumée comme fluide gazeux (14).

4. Procédé suivant la revendication 1 et 2, caractérisé en ce que le fluide gazeux (14) arrive, dans le refroidisseur (8), d'abord sur un autre fluide (17) porteur de chaleur perdue du procédé, de préférence porteur de l'énergie des gaz de fumée de la chaudière de récupération (3), qui présente un niveau de température plus bas que celui de l'air de refroidissement (12), est ainsi préchauffé et ensuite seulement est réchauffé à une température proche de celle de la turbine à gaz (1) par échange de chaleur avec l'air de refroidissement (12) de celle-ci.

5. Dispositif pour la mise en oeuvre du procédé suivant la revendication 1, caractérisé en ce que la turbine à gaz (1) est raccordée à la chaudière de récupération (3) par un raccord intermédiaire (2) connu en soi, dans la région du raccord intermédiaire (2), à la chaudière de récupération (3) sont disposés une cheminée de bipasse (6) connue en soi et pourvue d'un clapet de fermeture (7), et avant celle-ci, dans la direction d'écoulement, un refroidisseur (8) avec un échangeur de chaleur (9) intégré, en ce qu'aussi bien la turbine à gaz (1) que le refroidisseur (8) débouchent dans une zone de mélange commune (13) dans la région du raccord intermédiaire (2), et une conduite d'arrivée respectivement de départ (10, 11) pour l'air de refroidissement (12) de la turbine à gaz (1) arrive à l'échangeur de chaleur (9).

6. Dispositif pour la mise en oeuvre du procédé suivant la revendication 1, caractérisé en ce que la turbine à gaz (1) est raccordée à la chaudière de récupération (3) par un raccord intermédiaire (2) connu en soi, un refroidisseur (8) avec un échangeur de chaleur (9) intégré est disposé avant respectivement à la chaudière de récupération (3), en ce qu'aussi bien la turbine à gaz (1) que le refroidisseur (8) débouchent dans une zone de mélange commune (13) et une conduite d'arrivée respectivement de départ (10, 11) pour l'air de refroidissement (12) de la turbine à gaz (1) arrive à l'échangeur de chaleur (9).

7. Dispositif suivant la revendication 5 et 6, caractérisé en ce qu'une seconde conduite d'arrivée respectivement de départ (15, 16) pour un fluide (17) porteur de chaleur perdue avec un niveau de température plus bas que celui de l'air de refroidissement (12) arrive au refroidisseur (8), avant, dans le sens d'écoulement du fluide gazeux (14), la conduite d'arrivée respectivement de départ (10, 11) pour l'air de refroidissement (12) de la turbine à gaz (1).
